# EUROPÄISCHE PATENTANMELDUNG

(11) **EP 4 190 503 A1**
(43) Veröffentlichungstag der Anmeldung: **07.06.2023**
(21) Anmeldenummer: 21211569.5
(22) Anmeldetag: 01.12.2021
(51) Int. Cl.: B25F 5/00

(54) **WERKZEUGMASCHINE MIT EINEM SPEZIFISCHEN ABGABESTROM**

(71) Anmelder: Hilti Aktiengesellschaft, 9494 Schaan (LI)
(72) Erfinder: Greitmann, Ralf, 86916 Kaufering (DE); Meixner, Ralf, 87656 Germaringen (DE); Mayer, Stefan, 86857 Hurlach (DE); Taack-Trakranen, John Van, 81475 Muenchen (DE); Frenzel, Mathias, 86944 Unterdießen (DE); Holubarsch, Markus, 86899 Landsberg am Lech (DE); Hauser, Klaus, 86830 Schwabmünchen (DE)
(74) Vertreter: Hilti Aktiengesellschaft Corporate Intellectual Property

(57) **Zusammenfassung**

Die vorliegende Erfindung betrifft eine Werkzeugmaschine (1) mit einem Motor (2) und einer Energieversorgungsvorrichtung (3), wobei ein Abgabestrom der Energieversorgungsvorrichtung (3) zur Werkzeugmaschine (1) größer oder gleich 70 Ampere ist. Das Leistungsgewicht L der Werkzeugmaschine (1) liegt beispielsweise in einem Bereich von größer oder gleich 0,30 kW/kg. Darüber hinaus kann ein Leistungsgewicht L der Werkzeugmaschine (1) vorzugsweise in einem Bereich von größer oder gleich 0,30 kW/kg liegt. Darüber hinaus wird ein Kontaktsystem (8) zur Übertragung von elektrischer Energie von der Energieversorgungsvorrichtung (3) an die Werkzeugmaschine (1) offenbart, wobei das Kontaktsystem (8) mindestens einen ersten Kontakt (6) und mindestens einen zweiten Kontakt (7) aufweist, wobei eine Kontaktfläche (9) zwischen den beiden Kontakten (6, 7) eine Größe von größer oder gleich 20 mm² aufweist.

## Beschreibung

Die vorliegende Erfindung betrifft eine Werkzeugmaschine mit einem Motor und einer Energieversorgungsvorrichtung, wobei ein Abgabestrom der Energieversorgungsvorrichtung zur Werkzeugmaschine größer oder gleich 70 Ampere (A) ist. Das Leistungsgewicht der Werkzeugmaschine kann beispielsweise in einem Bereich von größer oder gleich 0,30 kW/kg liegen. Darüber hinaus kann ein Leistungsgewicht L der Werkzeugmaschine durch einen Quotienten einer Abgabeleistung des Motors und einer Masse der Werkzeugmaschine festlegbar ist, wobei das Leistungsgewicht der Werkzeugmaschine vorzugsweise in einem Bereich von größer oder gleich 0,30 kW/kg liegt. Ferner kann eine Aufnahmeleistung der Werkzeugmaschine in einem Bereich von 2,5 bis 4 kW liegen, bevorzugt in einem Bereich von 3 bis 3,5 kW und am meisten bevorzugt bei etwa 3,2 kW. Darüber hinaus wird ein Kontaktsystem zur Übertragung von elektrischer Energie von der Energieversorgungsvorrichtung an die Werkzeugmaschine vorgeschlagen, wobei das Kontaktsystem mindestens einen ersten Kontakt und mindestens einen zweiten Kontakt aufweist, wobei die Kontakte eine Kontaktquerschnittsfläche mit einer Größe von größer oder gleich 20 mm² aufweisen.

### Hintergrund der Erfindung:

Im Bereich der Werkzeugmaschinen sind große Trennschleifer bekannt, mit denen ein Untergrund bearbeitet oder geschnitten werden kann. Solche Trennschleifer weisen zumeist einen Benzin- oder Verbrennungsmotor auf, um die für die Durchführung der Arbeit erforderliche Leistung zu erzeugen. Allerdings sind solche benzinbetriebenen Trennschleifer oder Trenngeräte aus ökologischen Gründen zunehmend unerwünscht, zum einen wegen des Energieverbrauchs, zum anderen wegen der etwaigen gesundheitlichen Beeinträchtigungen für den Nutzer, beispielsweise durch Abgase und den darin enthaltenen Schadstoffen.

Um hier Abhilfe zu schaffen, ist vorgeschlagen worden, die Energieversorgung für solche Trennschleifer anders zu lösen, beispielsweise mit Hilfe von elektrischen Energieversorgungsvorrichtungen, wie Batterien oder austauschbaren Akkumulatoren ("Akkus").

Nachteilig an solchen batteriebetriebenen Trennschleifern kann eine zu geringe Leistungsstärke des Geräts sein, die dazu führen kann, dass die mit der Werkzeugmaschine durchzuführenden Trenn- oder Schneidarbeiten nicht oder nicht zufriedenstellend ausgeführt werden können.

Die Aufgabe, die der vorliegenden Erfindung zugrunde liegt, besteht darin, die vorstehend beschriebenen Mängel und Nachteile des Standes der Technik zu überwinden und eine batterie- oder akkubetriebene Werkzeugmaschine bereitzustellen, die es ermöglicht, Trenn- oder Schneidarbeiten durchzuführen, für die eine hohe Leistung erforderlich ist.

Die Aufgabe wird gelöst durch den Gegenstand des unabhängigen Anspruchs. Vorteilhafte Ausführungsformen zu dem Gegenstand des unabhängigen Anspruchs finden sich in den abhängigen Ansprüchen.

### Beschreibung der Erfindung:

Erfindungsgemäß ist eine Werkzeugmaschine mit einem Motor und einer Energieversorgungsvorrichtung, wobei ein Abgabestrom der Energieversorgungsvorrichtung zur Werkzeugmaschine größer oder gleich 70 Ampere ist. In einer besonders bevorzugten Ausgestaltung der Erfindung kann der Abgabestrom der Energieversorgungsvorrichtung zur Werkzeugmaschine beispielsweise bei 73 Ampere oder bei über 80 Ampere liegen. Die hohen Abgabeströme können insbesondere dadurch bereitgestellt werden, dass besonders leistungsfähige Akkumulatoren und/ oder Batterien in der Werkzeugmaschine als Energieversorgungsvorrichtung verwendet werden.

Beispielsweise können zwei Akkus eine Energieversorgungsvorrichtung für die vorgeschlagene Werkzeugmaschine bilden, wobei diese Energieversorgungsvorrichtung die Werkzeugmaschine mit elektrischer Energie versorgt und die Abgabe der überraschend hohen Ströme ermöglicht.

Es ist im Sinne der Erfindung bevorzugt, dass die Akkumulatoren je einen Plus- und einen Minus-Kontakt aufweisen. Es kann im Sinne der Erfindung aber auch bevorzugt sein, dass die Ackumulatoren mehr als einen Plus- und mehr als einen Minus-Kontakt aufweisen. Beispielsweise können die Akkumulatoren der Werkzeugmaschine zwei Plus-Kontakte und zwei Minus-Kontakte aufweisen. Denkbar sind selbstverständlich auch mehr als zwei Plus- und/oder Minus-Pole im Bereich der Akkumulatoren der vorgeschlagenen Werkzeugmaschine. Es kann im Sinne der Erfindung insbesondere bevorzugt sein, dass zwei oder mehr Leistungsaufnahmeelemente verwendet werden.

Es ist im Sinne der Erfindung bevorzugt, dass die Werkzeugmaschine eine Kontaktsystem zur Übertragung von elektrischer Energie zwischen der Werkzeugmaschine und der Energieversorgungsvorrichtung aufweist, wobei das Kontaktsystem mindestens einen ersten Kontakt aufweist und mindestens einen zweiten Kontakt, wobei die Kontakte eine Kontaktfläche mit einer Größe von größer oder gleich 20 mm² aufweisen. Die Kontaktfläche stellt insbesondere eine Kontaktquerschnittsfläche dar.

Die Pole bzw. die Kontakte der Akkumulatoren können zusammen mit den korrespondierenden Polen oder Kontakten der Werkzeugmaschine ein Kontaktsystem bilden. Das Kontaktsystem umfasst einen oder mehrere akkuseitige Kontakte, die im Sinne der Erfindung bevorzugt als "erste Kontakte" bezeichnet werden, sowie einen oder mehrere geräteseitige Kontakte, die bevorzugt Bestandteil der Werkzeugmaschine sind und die mit den akkuseitigen Kontakten zusammenwirken, um eine stromführende Verbindung zwischen den Akkumulatoren und der Werkzeugmaschine zu bilden. Die akkuseitigen Kontakte oder Pole können im Sinne der Erfindung bevorzugt auch als Gruppe von ersten Kontakten bezeichnet werden. Die geräteseitigen Kontakte oder Pole werden im Sinne der Erfindung bevorzugt als zweite Kontakte oder als Gruppe von zweiten Kontakten bezeichnet. Das Kontaktsystem bildet vorzugsweise eine Schnittstelle zwischen Energieversorgungsvorrichtung und Werkzeugmaschine, mit deren Hilfe die elektrische Energie aus den Akkumulatoren zur Werkzeugmaschine geleitet bzw. geführt werden kann. Das Kontaktsystem umfassend die ersten und zweiten Kontakte ist durch einen Stromübertragungsquerschnitt gekennzeichnet, wobei der Stromübertragungsquerschnitt von einer Fläche gebildet wird, die 20 mm² oder größer ist. Es ist im Sinne der Erfindung bevorzugt, dass der Stromübertragungsquerschnitt durch einen maximalen Flächen-Querschnitt definiert wird, den mindestens ein erster Kontakt mit mindestens einem zweiten Kontakt bildet. Mit anderen Worten handelt es sich bei dem Stromübertragungsquerschnitt um die Fläche, durch die elektrische Energie von den ersten Kontakten zu den zweiten Kontakten übergehen kann. Es ist im Sinne der Erfindung bevorzugt, dass die Leitung der elektrischen Energie von dem mindestens einen Akkumulator zur Werkzeugmaschine durch die sich berührenden bzw. in Kontakt stehenden ersten und zweiten Kontakte erfolgt, wobei die Kontaktfläche der ersten und zweiten Kontakte vorzugsweise größer oder gleich 20 mm² ist. Der Kontaktfläche ist vorzugsweise durch den Bereich bzw. diejenige Fläche definiert, in dem sich die ersten und zweiten Kontakte berühren. Durch das Kontaktsystem wird eine kontinuierliche Stromübertragung zwischen Akkumulatoren und Werkzeugmaschine von mehr als 70 Ampere, bevorzugt mehr als 73 Ampere und am meisten bevorzugt von mehr als 80 Ampere ermöglicht. Das bedeutet im Sinne der Erfindung bevorzugt, dass es sich bei den genannten Strömen um einen Dauerstrom handelt, der nicht nur für kurze Zeit oder als Peak abgegeben wird, sondern vorzugsweise über einen längeren Zeitraum.

Die Kontakte können als weibliche und männliche Steckkontakte ausgebildet sein. Es ist im Sinne der Erfindung bevorzugt, dass die ersten Kontakte als weibliche Steckkontakte und die zweiten Kontakte als männliche Steckkontakte ausgebildet sind. Es kann aber genauso bevorzugt sein, dass die ersten Kontakte als männliche Steckkontakte und die zweiten Kontakte als weibliche Steckkontakte ausgebildet sind. Am meisten bevorzugt ist es, dass die ersten Kontakte am Akku vorliegen und weiblich ausgebildet sind, während die zweiten Kontakte an der Werkzeugmaschine angeordnet vorliegen und männlich ausgebildet sind.

Vorzugsweise basiert die Verbindung zwischen den ersten und den zweiten Kontakten durch eine Berührung zwischen den Kontakten, die im Bereich einer Kontaktfläche besteht. Die Größe dieser Kontaktfläche liegt vorzugsweise in einem Bereich von größer oder gleich 20 mm². In einem Ausführungsbeispiel der Erfindung kann die Kontaktfläche beispielsweise eine Größe von 24,4 mm² aufweisen.

Selbstverständlich kann das Kontaktsystem anstelle der Gruppen von ersten und zweiten Kontakten lediglich einen ersten Kontakt und einen zweiten Kontakt umfassen. Dann liegt beispielsweise ein erster Kontakt, der vorzugsweise weiblich ausgebildet ist, an einem Akku der Energieversorgungseinrichtung vor, während ein zweiter Kontakt, der vorzugsweise männlich ausgebildet ist, an der Werkzeugmaschine angeordnet vorliegt.

Es stellt einen besonderen Vorteil der Erfindung dar, dass eine Werkzeugmaschine bereitgestellt werden kann, deren Energieversorgungseinrichtung einen Dauerstrom in Richtung Werkzeugmaschine von größer oder gleich 70 Ampere abgeben kann. Dieser hohe Abgabestrom wird vorzugsweise durch ein Kontaktsystem mit akku- und geräteseitigen Kontakten erreicht, die miteinander eine Kontaktfläche von größer oder gleich 20 mm² aufweisen. Bei den Kontakten kann es sich insbesondere um zwei Plus-Kontakte und zwei Minus-Kontakte handeln. Es kann im Sinne der Erfindung auch bevorzugt sein, dass das Kontaktsystem von korrespondierenden männlichen und weiblichen Steckkontakten gebildet wird, deren Kontaktfläche eine Größe von größer oder gleich 20 mm² aufweist. Es ist im Sinne der Erfindung bevorzugt, dass die Kontaktfläche zwischen je einem ersten und einem zweiten Kontakt eine Größe von größer oder gleich 20 mm² aufweist.

Es war vollkommen überraschend, dass mit der Erfindung eine Werkzeugmaschine mit einem Abgabestrom von 70 Ampere oder mehr bereitgestellt werden kann. Es ist im Sinne der Erfindung bevorzugt, dass der Strom zwischen der Energieversorgungsvorrichtung und der Werkzeugmaschine über je einen Plus- bzw. Minuspol fließt. Es kann im Sinne der Erfindung aber auch bevorzugt sein, dass der Strom zwischen der Energieversorgungsvorrichtung und der Werkzeugmaschine über zwei Plus- bzw. Minuspole fließt. Der Abgabestrom wird vorzugsweise von der Energieversorgungsvorrichtung an die Werkzeugmaschine abgegeben und von der Werkzeugmaschine aufgenommen. Der Abgabestrom kann im Sinne der Erfindung auch als Aufnahmestrom bzw. als Versorgungsstrom bezeichnet werden. Insofern betrifft die Erfindung insbesondere eine batterie- oder akkubetriebene Werkzeugmaschine mit besonders hohen Aufnahmeströmen.

Es ist im Sinne der Erfindung bevorzugt, dass ein Leistungsgewicht L der Werkzeugmaschine durch einen Quotienten einer Abgabeleistung P des Motors und einer Masse M1 der Werkzeugmaschine festlegbar ist, wobei L = P/M1. Die Werkzeugmaschine kann ein Leistungsgewicht L in einem Bereich von größer oder gleich 0,30 kW/kg aufweisen. Es stellt einen überraschenden Vorteil der Erfindung dar, dass eine Werkzeugmaschine bereitgestellt werden kann, die ein Leistungsgewicht L von größer oder gleich 0,30 kW/kg aufweist. Bisher waren solche Leistungsgewichten für Werkzeugmaschinen von der Fachwelt für nicht umsetzbar gehalten worden, insbesondere, wenn es sich bei der Werkzeugmaschine um eine batterie- oder akkumulatorbetriebene Werkzeugmaschine handelt. Die vorgeschlagene Werkzeugmaschine kombiniert vorteilhafterweise eine hohe Abgabeleistung P des Motors der Werkzeugmaschine mit einer überraschend geringen Masse M1 der Werkzeugmaschine, so dass ein Quotient aus diesen Größen in einem Bereich von größer oder gleich 0,30 kW/kg erhalten wird. Somit wendet sich die Erfindung gerade vom Stand der Technik ab, der solch hohe Leistungsgewichte nicht für möglich gehalten hatte. In einer besonders bevorzugten Ausgestaltung der Erfindung kann das Leistungsgewicht L als Quotient aus Abgabeleistung und Masse der Werkzeugmaschine beispielsweise bei 0,333 kW/kg liegen.

Die Werkzeugmaschine weist eine Energieversorgungsvorrichtung auf, wobei die Energieversorgungsvorrichtung der Werkzeugmaschine einen Akkumulator, zwei Akkumulatoren oder mehr Akkumulatoren umfasst. Es ist im Sinne der Erfindung bevorzugt, dass die Masse M1 das Gesamtgewicht der Werkzeugmaschine beschreibt. Das Gesamtgewicht der Werkzeugmaschine entspricht dem Gewicht der Werkzeugmaschine in einer betriebsbereiten Konfiguration, d.h. in einer Konfiguration, in der mit der Werkzeugmaschine gearbeitet werden kann. In dieser betriebsbereiten Konfiguration umfasst die Werkzeugmaschine insbesondere die Energieversorgungsvorrichtung, sowie ein Werkzeug, das weiter unten beschrieben wird. Mit anderen Worten stellt die Masse M1 der Werkzeugmaschine das Gesamtgewicht der Werkzeugmaschine und ihrer Bestandteile dar, so wie für den Betrieb der Werkzeugmaschine erforderlich. Die Masse M1 umfasst somit insbesondere die Einzelmassen der eigentlichen Werkzeugmaschine, ihres Werkzeugs und der Energieversorgungsvorrichtung.

Es ist im Sinne der Erfindung bevorzugt, dass eine Masse M2 der Energieversorgungsvorrichtung in einem Bereich von 1 bis 2 kg liegt, bevorzugt in einem Bereich von 1,2 bis 1,5 kg und am meisten bevorzugt bei etwa 1,25 kg. Die Masse M2 bzw. das Gewicht der Batterien und/oder Akkus, die vorzugsweise die Energieversorgungsvorrichtung bilden, kann beispielsweise in einem Bereich von 1 bis 2 kg liegen, bevorzugt in einem Bereich von 1,2 bis 1,5 kg und am meisten bevorzugt bei etwa 1,25 kg. In einer besonders bevorzugten Ausgestaltung der Erfindung liegt das Gewicht M2 der Energieversorgungsvorrichtung bei 1,26 kg. Dabei wird der Begriff «Masse der Energieversorgungsvorrichtung» als Masse bzw. Gewicht der Zellen der Energieversorgungsvorrichtung verwendet wird. Mit anderen Worten entspricht die Masse M2 der Energieversorgungsvorrichtung dem Gesamtgewicht der Zellen der Akkumulatoren der Energieversorgungsvorrichtung. Das Gewicht M2 der Energieversorgungsvorrichtung kann sich beispielsweise als Produkt der Massen der einzelnen Zellen und der Anzahl der Zellen der Energieversorgungsvorrichtung ergeben.

In einer bevorzugten Ausgestaltung der Erfindung liegt ein Verhältnis K der Masse M2 der Energieversorgungsvorrichtung der Werkzeugmaschine und der Abgabeleistung P des Motors der Werkzeugmaschine in einem Bereich von kleiner oder gleich 0,45 kg/kW, wobei K = M2/P. Auch durch dieses Verhältnis kommt die überraschend hohe Abgabe- oder Ausgangsleistung der Werkzeugmaschine bzw. ihres Motors in Relation zu einem Massenmerkmal der Werkzeugmaschine zum Ausdruck. Mithin kann mit der vorgeschlagenen Werkzeugmaschine eine besonders hohe Leistungsdichte in Bezug auf das Gewicht der Energieversorgungsvorrichtung bereitgestellt werden. Das bedeutet im Sinne der Erfindung bevorzugt, dass in Ansehung der Größe und des Gewichts der Energieversorgungsvorrichtung eine besonders leistungsstarke Werkzeugmaschine bereitgestellt werden kann, mit der vorteilhafterweise auch schwere und leistungsintensive Trenn- und Schneidarbeiten durchgeführt werden können. Dabei ist die mit der Erfindung bereitgestellte Werkzeugmaschine überraschend leicht und der Nutzer kann für eine besonders lange Nutzungsdauer ohne körperliche Beeinträchtigungen mit der Werkzeugmaschine arbeiten.

Es ist im Sinne der Erfindung bevorzugt, dass ein Volumen der Energieversorgungsvorrichtung der Werkzeugmaschine kleiner oder gleich 0,5 L ist. In einer besonders bevorzugten Ausgestaltung der Erfindung kann das Volumen der Energieversorgungsvorrichtung bei 0,47 L liegen. Auf diese Weise kann eine besonders kompakte und handliche Werkzeugmaschine bereitgestellt werden, wodurch das Arbeiten mit der vorgeschlagenen Werkzeugmaschine weiter erleichtert wird.

Vorzugsweise weist ein Akkumulator der Energieversorgungsvorrichtung eine Nennspannung in einem Bereich von 20 bis 25 Volt (V) auf, bevorzugt in einem Bereich von 21 bis 23 V, und am meisten bevorzugt in einem Bereich von 21,5 bis 22 V. Die Energieversorgungsvorrichtung der Werk-zeugmaschine kann beispielsweise ein oder zwei Akkumulatoren umfassen, wobei auch mehr als zwei Akkumulatoren denkbar sind. Es ist im Sinne der Erfindung bevorzugt, dass jeder Akkumulator der Energieversorgungsvorrichtung eine Nennspannung in einem bevorzugten Bereich von 21,5 bis 22 V aufweist. Wenn die Energieversorgungsvorrichtung der Werkzeugmaschine zum Beispiel zwei Akkus aufweist, liegt eine Gesamtspannung der Energieversorgungsvorrichtung in einem Bereich von 43 bis 44 V, wobei dieser Wert vorzugsweise die Summe der Einzelspannungen der Batterien und/oder Akkus darstellt, die die Energieversorgungseinheit bilden.

In einer bevorzugten Ausgestaltung der Erfindung ist der Motor der Werkzeugmaschine ein bürstenloser Motor. Insbesondere kann es sich bei dem Motor der Werkzeugmaschine um einen bürstenlosen Elektromotor handeln. Der Motor weist vorzugsweise eine Baulänge von größer oder gleich 30 mm auf. Beispielsweise kann ein Statorblech des Motors eine Länge von 30 mm oder größer aufweisen. Darüber hinaus kann der Motor einen Außendurchmesser in einem Bereich von größer oder gleich 75 mm aufweisen.

Es ist im Sinne der Erfindung bevorzugt, dass eine Abgabeleistung P des Motors der Werkzeugmaschine in einem Bereich von 2 bis 4 kW liegt, bevorzugt in einem Bereich von 2,5 bis 3,3 kW und am meisten bevorzugt bei etwa 2,8 kW. Die überraschend hohe Abgabeleistung P des Motors der vorgeschlagenen Werkzeugmaschine ist vorzugsweise auf die genannten Parameter des Motors zurückzuführen. Um die hohen Abgabeleistungswerte zu erreichen, wird vorteilhafterweise ein bürstenloser Motor verwendet, der besonders kompakt ausgebildet ist und eine hohe Raum- bzw. Volumenausnutzung aufweist.

In einer bevorzugten Ausgestaltung der Erfindung liegt ein Wirkungsgrad der Werkzeugmaschine in einem Bereich von größer oder gleich 0,70, bevorzugt in einem Bereich von größer oder gleich 0,75. Der Begriff «Wirkungsgrad der Werkzeugmaschine» beschreibt im Sinne der Erfindung bevorzugt den Wirkungsgrad des Antriebssystems der Werkzeugmaschine, wobei das Antriebssystem der Werkzeugmaschine vorzugsweise eine Elektronik und den Motor der Werkzeugmaschine umfasst. Somit liegt der Wirkungsgrad des Antriebssystems der Werkzeugmaschine bevorzugt in einem Bereich von größer oder gleich 0,8, bevorzugt in einem Bereich von größer oder gleich 0,85. Der Wirkungsgrad stellt im Sinne der Erfindung bevorzugt den Quotienten aus Eingabeleistung des Motors der Werkzeugmaschine und Ausgabeleistung des Motors der Werkzeugmaschine dar.

Die Eingabeleistung des Motors der Werkzeugmaschine kann beispielsweise in einem Bereich von 2,5 bis 4 kW liegen, bevorzugt in einem Bereich von 3 bis 3,5 kW und am meisten bevorzugt bei etwa 3,2 kW.

Es ist im Sinne der Erfindung bevorzugt, dass die Werkzeugmaschine ein Winkelschleifer, ein Trennschleifer oder ein Trenngerät ist. Die Erfindung stellt insbesondere eine handgeführte Elektrowerkzeugmaschine dar, die vorzugsweise batterie- oder akkubetrieben sein kann. Der Abgabestrom der Energieversorgungsvorrichtung zur Werkzeugmaschine ist größer oder gleich 70 A und kann beispielsweise bei 73 A liegen, so dass mit der Erfindung ein besonders leistungsstarker batterie- oder akkubetriebener Trennschleifer mit einem überraschend hohen Versorgungsstrom bereitgestellt werden kann. Der Abgabestrom der Energieversorgungsvorrichtung in Richtung der Werkzeugmaschine stellt vorzugsweise auch den Aufnahmestrom der Werkzeugmaschine aus Richtung der Energieversorgungsvorrichtung dar.

Die Werkzeugmaschine weist insbesondere ein scheibenförmiges Werkzeug auf, wobei ein Durchmesser des scheibenförmigen Werkzeugs in einem Bereich von 250 bis 450 mm liegen kann, bevorzugt in einem Bereich von 270 bis 400 mm, mehr bevorzugt in einem Bereich von 290 bis 350 mm und am meisten bevorzugt bei etwa 300 mm. Es ist im Sinne der Erfindung insbesondere bevorzugt, dass der Durchmesser des scheibenförmigen Werkzeugs größer oder gleich 300 mm ist. Auf diese können Trenn- oder Schneidarbeiten besonders effektiv und unkompliziert ausgeführt werden.

In einer bevorzugten Ausgestaltung der Erfindung liegt eine Masse M1 der Werkzeugmaschine in einem Bereich von 6 bis 12 kg, bevorzugt in einem Bereich von 8 bis 10 kg, mehr bevorzugt in einem Bereich von 8,3 bis 9 kg und am meisten bevorzugt in einem Bereich von kleiner oder gleich 8,6 kg. Insbesondere ein Gesamtgewicht der Werkzeugmaschine von etwa 8,6 kg oder weniger stellt ein für Trennschleifer sehr geringes Gesamtgewicht dar, insbesondere dann, wenn das Gewicht der Energieversorgungsvorrichtung und des Werkzeugs einbezogen ist. Es ist im Sinne der Erfindung bevorzugt, dass das überraschend geringe Gewicht der Werkzeugmaschine durch die Verwendung von Materialien, wie Aluminium und/oder hochfestem Kunststoff, erreicht wird. Insbesondere umfasst die Werkzeugmaschinen eine Leichtbau-Rahmenkonstruktion. Eine hohe Funktionsintegration an den Hauptkomponenten der Werkzeugmaschine, beispielsweise an dem Motorgehäuse, reduziert die Anzahl der erforderlichen Einzelteile und führt so zu einer weiteren Gewichtsreduktion.

Es ist im Sinne der Erfindung bevorzugt, dass eine Aufnahmeleistung der Werkzeugmaschine in einem Bereich von 2,5 bis 4 kW liegt, bevorzugt in einem Bereich von 3 bis 3,5 kW und am meisten bevorzugt bei etwa 3,2 kW.

Die im Hinblick auf die Erfindung offenbarten Zahlenbereiche sind jeweils so zu verstehen, dass auch alle ganzzahligen, rationalen und irrationalen Zwischenwerte mitumfasst und als offenbart gelten sollen. Weitere Vorteile der Erfindung ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung der vorgeschlagenen Werkzeugmaschine
- Fig. 2: Ansicht einer bevorzugten Ausgestaltung des Kontaktsystems zur Übertragung von elektrischer Energie von der Energieversorgungsvorrichtung an die Werkzeugmaschine

### Ausführungsbeispiele und Figurenbeschreibung:

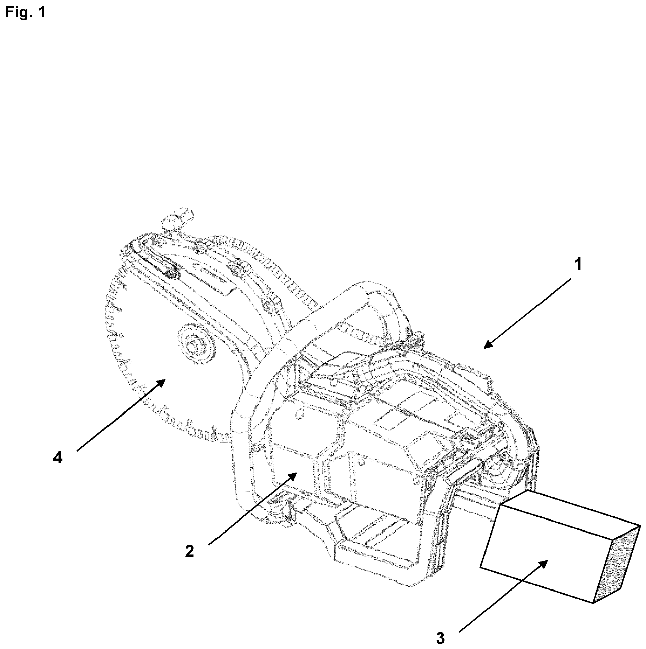

Figur 1 zeigt eine bevorzugte Ausgestaltung der vorgeschlagenen Werkzeugmaschine 1. Insbesondere zeigt Figur 1 einen Trennschleifer 1, der einen Motor 2 umfasst. Der Motor 2 kann zwischen einem Schneidarm und einer Energieversorgungsvorrichtung 3 angeordnet vorliegen.

Insbesondere kann es sich um einen bürstenlosen Elektromotor handeln, wobei der Motor 2 beispielsweise einen Außendurchmesser von größer oder gleich 75 mm aufweisen. Die Energieversorgungsvorrichtung 3 kann einen, zwei oder mehrere Akkumulatoren umfassen, wobei der oder die Akkus beispielsweise auf einer Rückseite der Werkzeugmaschine 1 in einen Aufnahme- oder Batterieschacht eingeführt werden können. Ein Gesamtgewicht M2 der Energieversorgungsvorrichtung 3 kann beispielsweise bei 1,26 kg liegen. Es ist im Sinne der Erfindung bevorzugt, dass die Energieversorgungsvorrichtung 3 mit den Akkus in einem hinteren Bereich der Werkzeugmaschine 1 vorliegt, insbesondere in räumlicher Nähe zu einer Unterseite des Hauptkörpers der Werkzeugmaschine 1. Vorzugsweise weist ein Akkumulator der Energieversorgungsvorrichtung 3 der Werkzeugmaschine 1 zwei Plus- und zwei Minuskontakte auf.

Dadurch kann vorteilhafterweise die Bereitstellung der besonders hohen Abgabeströme ermöglicht werden. Wenn die Energieversorgungsvorrichtung 3 mehr als einen Akkumulator aufweist,

ist es im Sinne der Erfindung bevorzugt, dass alle Akkumulatoren der Werkzeugmaschine 1 zwei Plus- und zwei Minuskontakte aufweisen. Es kann allerdings auch bevorzugt sein, dass nur eine Teilmenge der Akkus zwei Plus- und zwei Minuskontakte zur Übertragung der elektrischen Energie aufweist. Die Pluskontakte und Minuskontakte bilden vorzugsweise die Schnittstelle zwischen der Energieversorgungsvorrichtung 3 und der Werkzeugmaschine 1, wobei die Aufgabe der Schnittstelle die Übertragung der - beispielsweise in den Akkus gespeicherten - elektrischen Energie von der Energieversorgungsvorrichtung 3 an die Werkzeugmaschine 1 ist.

Am Schneidarm der Werkzeugmaschine 1 kann ein Werkzeug 4 vorgesehen sein, das vorzugsweise scheibenförmig ausgebildet sein kann. Vorzugsweise kann es sich um ein Trenn- oder Schneidblatt handeln. Es ist im Sinne der Erfindung bevorzugt, dass das Werkzeug 4 einen Durchmesser von 300 mm aufweist.

Der Motor 2 der Werkzeugmaschine 1 ist vorzugsweise so beschaffen, dass der Motor 2 eine Eingabeleistung von beispielsweise 3,3 kW und eine Abgabeleistung P von ca. 2,8 kW erbringen kann. Das Leistungsgewicht L der in Figur 1 dargestellten Werkzeugmaschine 1 liegt in einem Bereich von größer oder gleich 0,30 kW/kg, wobei das Leistungsgewicht L von einem Quotienten der Abgabeleistung P des Motors 2 und der Masse M1 der Werkzeugmaschine 1 gebildet wird. Darüber hinaus kann ein Verhältnis der Masse der Energieversorgungsvorrichtung 3 der Werkzeugmaschine 1 und der Abgabeleistung des Motors 2 der Werkzeugmaschine 1 in einem Bereich von kleiner oder gleich 0,45 kg/kW liegen.

Es ist erfindungsgemäß vorgesehen, dass ein Abgabestrom der Energieversorgungsvorrichtung 3 in Richtung der Werkzeugmaschine 1 größer oder gleich 70 A ist. Beispielsweise kann dieser Aufnahmestrom der Werkzeugmaschine 1 bzw. ihr Versorgungsstrom bei 73 Ampere liegen.

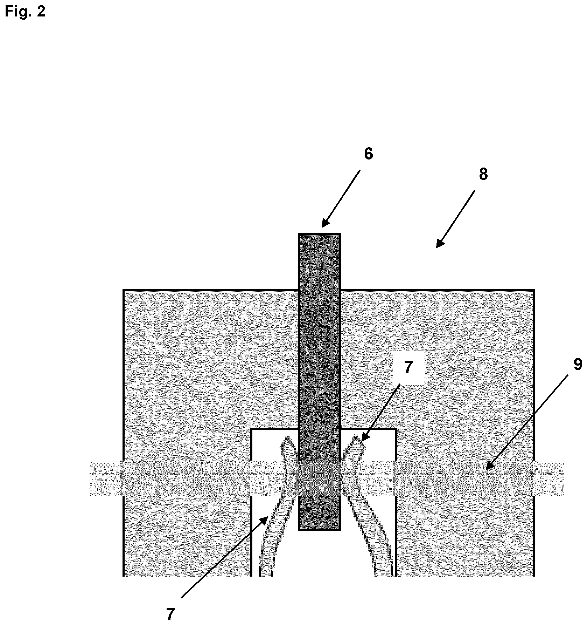

Fig. 2 zeigte eine bevorzugte Ausführungsform des Kontaktsystems 8, mit dem elektrische Energie von der Energieversorgungsvorrichtung 3 an die Werkzeugmaschine 1 übertragen werden kann. Das Kontaktsystem 8 weist zwei unterschiedliche Gruppen von Kontakten auf, die beispielsweise als Plus- und Minuspole oder als weibliche Kontakte 7 und männliche Kontakte 6 ausgebildet sein können. Die Kontakte 6, 7 weisen einen Kontaktbereich 9 bzw. eine Kontaktquerschnittsfläche 9 mit einer Fläche von größer oder gleich 20 mm² auf. Beispielsweise stellen die männlichen Kontakte 6 die Gruppe von zweiten Kontakten dar, wobei diese zweiten Kontakte 6 vorzugsweise an der Werkzeugmaschine 1 vorliegen und männlich ausgebildet sind. Analog können die weiblichen Kontakte 7 die Gruppe von ersten Kontakten darstellen, wobei diese ersten Kontakte 7 vorzugsweise an der Energieversorgungsvorrichtung 3 vorliegen und weiblich ausgebildet sind. Vorzugsweise liegen die ersten bzw. die weiblichen Kontakte 7 an dem mindestens einen Akku der Energieversorgungsvorrichtung 3 der Werkzeugmaschine 1 vor.

### Bezugszeichenliste

- 1: Werkzeugmaschine
- 2: Motor
- 3: Energieversorgungsvorrichtung
- 4: scheibenförmiges Werkzeug
- 5: Kontaktsystem
- 6: männlicher Kontakt
- 7: weiblicher Kontakt
- 8: Kontaktsystem
- 9: Kontaktbereich, Kontaktquerschnittsfläche

## Patentansprüche

1. Werkzeugmaschine (1) mit einem Motor (2) und einer Energieversorgungsvorrichtung (3)
**dadurch gekennzeichnet, dass**
ein Abgabestrom der Energieversorgungsvorrichtung (3) zur Werkzeugmaschine (1) größer oder gleich 70 Ampere ist.

2. Werkzeugmaschine (1) nach Anspruch 1
**dadurch gekennzeichnet, dass**
die Energieversorgungsvorrichtung (3) einen Akkumulator, zwei Akkumulatoren oder mehr Akkumulatoren umfasst.

3. Werkzeugmaschine (1) nach Anspruch 2
**dadurch gekennzeichnet, dass**
ein Akkumulator der Energieversorgungsvorrichtung (3) eine Nennspannung in einem Bereich von 20 bis 25 V aufweist, bevorzugt in einem Bereich von 21 bis 23 V, und am meisten bevorzugt in einem Bereich von 21,5 bis 22 V.

4. Werkzeugmaschine (1) nach Anspruch 2 oder 3
**dadurch gekennzeichnet, dass**
ein Akkumulator der Werkzeugmaschine (1) zwei Plus-Kontakte und zwei Minus-Kontakte aufweist.

5. Werkzeugmaschine (1) nach einem der vorhergehenden Ansprüche
**dadurch gekennzeichnet, dass**
die Werkzeugmaschine (1) eine Kontaktsystem (8) zur Übertragung von elektrischer Energie zwischen der Werkzeugmaschine (1) und der Energieversorgungsvorrichtung (3) aufweist, wobei das Kontaktsystem (8) mindestens einen ersten Kontakt (6) aufweist und mindestens einen zweiten Kontakt (7), wobei die Kontakte (6, 7) eine Kontaktquerschnittsfläche (9) mit einer Größe von größer oder gleich 20 mm² aufweisen.

6. Werkzeugmaschine (1) nach einem der vorhergehenden Ansprüche
**dadurch gekennzeichnet, dass**
eine Masse M2 der Energieversorgungsvorrichtung (3) in einem Bereich von 1 bis 2 kg liegt, bevorzugt in einem Bereich von 1,2 bis 1,5 kg und am meisten bevorzugt bei etwa 1,25 kg.

7. Werkzeugmaschine (1) nach einem der vorhergehenden Ansprüche
**dadurch gekennzeichnet, dass**
ein Verhältnis der Masse M2 der Energieversorgungsvorrichtung (3) der Werkzeugmaschine (1) und der Abgabeleistung P des Motors (2) der Werkzeugmaschine (1) in einem Bereich von kleiner oder gleich 0,45 kg/kW liegt.

8. Werkzeugmaschine (1) nach einem der vorhergehenden Ansprüche
**dadurch gekennzeichnet, dass**
ein Leistungsgewicht der Werkzeugmaschine (1) in einem Bereich von größer oder gleich 0,30 kW/kg liegt.

9. Werkzeugmaschine (1) nach einem der vorhergehenden Ansprüche
**dadurch gekennzeichnet, dass**
die Werkzeugmaschine (1) ein scheibenförmiges Werkzeug (4) aufweist.

10. Werkzeugmaschine (1) nach Anspruch 9
**dadurch gekennzeichnet, dass**
ein Durchmesser des scheibenförmigen Werkzeugs (4) in einem Bereich von 250 bis 450 mm liegt, bevorzugt in einem Bereich von 270 bis 400 mm, mehr bevorzugt in einem Bereich von 290 bis 350 mm und am meisten bevorzugt bei etwa 300 mm.

11. Werkzeugmaschine (1) nach einem der vorhergehenden Ansprüche
**dadurch gekennzeichnet, dass**
eine Masse M1 der Werkzeugmaschine (1) in einem Bereich von 6 bis 12 kg liegt, bevorzugt in einem Bereich von 8 bis 10 kg, mehr bevorzugt in einem Bereich von 8,3 bis 9 kg und am meisten bevorzugt in einem Bereich von kleiner oder gleich 8,6 kg.

12. Werkzeugmaschine (1) nach einem der vorhergehenden Ansprüche
**dadurch gekennzeichnet, dass**
eine Abgabeleistung P des Motors (2) der Werkzeugmaschine (1) in einem Bereich von 2 bis 4 kW liegt, bevorzugt in einem Bereich von 2,5 bis 3,3 kW und am meisten bevorzugt bei etwa 2,8 kW.

13. Werkzeugmaschine (1) nach einem der vorhergehenden Ansprüche
**dadurch gekennzeichnet, dass**
der Motor (2) der Werkzeugmaschine (1) einen Außendurchmesser in einem Bereich von größer oder gleich 75 mm aufweist.

14. Werkzeugmaschine (1) nach einem der vorhergehenden Ansprüche
**dadurch gekennzeichnet, dass**
ein Wirkungsgrad der Werkzeugmaschine (1) in einem Bereich von größer oder gleich 0,70 liegt, bevorzugt in einem Bereich von größer oder gleich 0,75.

15. Werkzeugmaschine (1) nach einem der vorhergehenden Ansprüche
**dadurch gekennzeichnet, dass**
eine Aufnahmeleistung der Werkzeugmaschine (1) in einem Bereich von 2,5 bis 4 kW liegt, bevorzugt in einem Bereich von 3 bis 3,5 kW und am meisten bevorzugt bei etwa 3,2 kW.
